# EUROPEAN PATENT SPECIFICATION

(11) **EP 2 921 386 B1**
(45) Date of publication and mention of the grant of the patent: **19.10.2016**
(21) Application number: 15159631.9
(22) Date of filing: 18.03.2015
(51) Int. Cl.: B62K 3/00, B62K 5/027, B62J 99/00, A01G 1/00

(54) **Ride-on implement carriage**
Aufstehwerkzeugwagen
Chariot porteur à outil

(30) Priority: 19.03.2014 FI 20145257
(43) Date of publication of application: 23.09.2015
(73) Proprietor: Joinde Oy, 40950 Muurame (FI)
(72) Inventor: Nokkala, Jorma, 40950 Muurame (FI)
(74) Representative: Helke, Kimmo Kalervo

(56) References cited:
- EP-A1- 1 180 342
- CN-U- 203 306 176
- DE-A1- 10 010 852
- US-A1- 2006 090 441
- US-A1- 2008 178 410
- US-A1- 2009 078 485
- US-A1- 2010 013 183

## Description

The invention relates to a ride-on implement carriage including
- a frame comprising a front end and a rear end,
- three wheels of which at least one is a turning wheel and at least one is a frame-mounted drive wheel fitted with bearings,
- steering means arranged at the front end of the frame for turning the turning wheel relative to the frame,
- support means for supporting the operator on the implement carriage,
- connecting means fitted in the frame for connecting the implement to the frame, and
- an electrical propulsion machinery actuated by a battery unit for rotating the drive wheel.

Clearing snow in winter from the outdoor areas of real estates and other large plots of land can be very laborious with manual snow rakes and shovels. Generally, tractors or mini loaders are used for clearing larger areas, such as parking places of supermarkets. However, these are not suitable for clearing snow in smaller areas or for private use. In this case, equipment provided with internal-combustion engines is often used, for example, an all-terrain vehicle having a snowplough or equivalent connected thereto. However, the problem with this equipment is the relatively loud and disturbing noise caused by it, which may cause disagreement about the appropriate time for clearing snow in densely populated areas. In addition, the acquisition and maintenance costs of equipment provided with internal-combustion engines are often high.

Publication US 5,890,545 is known as prior art proposing an electric three-wheel raking equipment. The raking equipment has a single steerable front wheel and two driving rear wheels connected to a common axle, as well as a seat for the operator at the centre of the frame. The rake is connected to the rear end of the raking equipment and it is towed with the raking equipment while it is moving, for example, in a sand trap of a golf course. However, such raking equipment is poorly suitable as an implement carriage for real estates, for example, since the two rear wheels and the towed implement are cutting while cornering thus making precise work difficult. In addition, the raking equipment has a notably heavy construction and gets easily stuck.

Publication US 2009/0078485 A1 discloses an electrically driven single-axle vehicle comprising all the features of the preamble of claim 1, with a platform for a driver, driven about a common wheel axis to improve its handling and its range of uses. The vehicle includes at least one attachment, the attachment being connected to the single-axle vehicle pivotably about at least one first attachment axis.

The object of the invention is to provide an implement carriage that is more advantageous and lighter in weight than prior art implement carriages and better suited to precise work than prior art implement carriages. The characteristic features of this invention are set forth in the appended claim 1.

The ride-on implement carriage according to the invention includes a frame comprising a front end and a rear end and three wheels, of which two are turning wheels fitted to the front end of the frame and one is a drive wheel fixedly mounted with bearings at the rear end of the frame. In addition, the implement carriage includes steering means fitted to the front end of the frame for turning the turning wheels relative to the frame, standing supports as support means essentially fitted to the rear end of the frame for enabling active shifting of the operator's weight in order to essentially place the weight of the operator on the drive wheel, and connecting means fitted to the front end of the frame for connecting an optional implement to the frame in order to ensure a minimum weight for the turning wheels. Furthermore, the implement carriage includes an electrical propulsion machinery actuated by a battery unit for rotating the drive wheel, said battery unit being essentially located at the front end of the frame for ensuring a minimum weight for the turning wheels.

In the implement carriage according to the invention, the weight of the heaviest components is positioned near the turning wheels for ensuring sufficient traction and a minimum weight, whereas the weight of the operator is mainly placed on the driving rear wheel. Using the standing supports, operators can shift their weight forwards, if necessary, so that the implement carriage is more stable to use and, on the other hand, backwards, to achieve better traction for the drive wheel. In this way, an implement carriage according to the invention can be realised comprising three wheels with one driving rear wheel, which ensures excellent manoeuvrability of the implement carriage.

In the implement carriage according to the invention, the propulsion machinery is an electrical propulsion machinery actuated by a battery. The weight of the battery unit is mainly placed on the turning wheels. With electrical implementation, the implement carriage according to the invention is very quiet during operation and, due to its simple design, economical to manufacture. The operating voltage may be in the range of 24 to 60 V, advantageously 48 V, whereupon a sufficiently high output is achieved with practical current values. Furthermore, an implement carriage according to the invention can be used without generation of greenhouse gases and other exhaust gases. In this context, the definition "at least one drive wheel" should be understood so that the drive wheel may be a traction wheel or a chain tread construction, wherein the traction wheel is the drive wheel rotating the chain tread construction.

According to an embodiment, standing supports are located below the drive wheel axle for stabilising the implement carriage.

This facilitates the use of the equipment, since it is easy to step up on and down from a low standing support.

Advantageously, the standing supports extend past the drive wheel axle included in the implement carriage, towards the connecting means. In this way, operators can essentially shift their weight onto the drive wheel or forwards from it influencing in this way the drivability of the implement carriage.

In an implement carriage according to the invention, the weight of the operator may be placed on the drive wheel for 30 - 100 %, advantageously for 60 - 100 %. In this way, good traction is also guaranteed for the drive wheel on a slippery surface.

The length of the support means may range between 25 % and 50 %, advantageously between 30 % and 40 % of the frame length. In this context, the frame length means the length that is parallel to the travel direction of the implement carriage.

According to a first embodiment, the propulsion machinery is arranged to transmit the propulsion power to the drive wheel as a wheel-hub drive. Thus, the construction can be implemented without a transmission chain, which simplifies the design and decreases transmission power losses.

According to a second embodiment, the propulsion machinery is arranged to transmit the propulsion power to the drive wheel as a chain drive or with a cogged belt. In this case, the propulsion machinery can be located separated from the drive wheel, which enables utilisation of parts that are larger in their physical dimensions and thereby cheaper.

The propulsion machinery may include at least a battery unit for storing energy, an electric motor for converting energy stored in the battery unit into rotary motion, a control unit for controlling the electric motor, and an RPM controller implemented with power semiconductors for controlling the speed of rotation of the electric motor. Such a propulsion machinery can produce a sufficiently high and uniform torque immediately when driving away from a standstill to achieve a good level of user comfort for the implement carriage.

Advantageously, the propulsion machinery includes a potentiometric or other electronic controller for controlling the power supply / speed of rotation. With the controller, the power supply /speed of rotation can be steplessly controlled, which improves the usability of the implement carriage and a smooth drive-away from a standstill.

Advantageously, the control unit is arranged to allow driving of the electric motor forwards at the full speed/output and backwards at a partial output/speed. In this way, the implement carriage can be safely reversed at a lower speed.

According to a third embodiment, a front axle, to the ends of which turning wheels are pivoted, is connected to the frame. Such a construction enables turning of the implement carriage and is economical to realise.

Advantageously, the implement carriage includes a handlebar for turning at least one turning wheel with the steering means. Using the handlebar, the operator can take a firm grip on the implement carriage, and the control equipment of the propulsion unit can be connected to the handlebar.

The implement carriage may include additional support wheels for stabilising the implement carriage. This enables utilisation of turning wheels located at a narrower interval between each other or a single turning wheel, in which case the implement carriage can be manufactured with a narrower design while still maintaining the stability of the carriage.

Advantageously, the implement is one or more of the following: snow rake, snowplough, snow blower, brushing equipment, waste collection equipment, lawn mower, wheelbarrow, shopping bag carrier. Thus, the implement carriage can be modified for many different purposes of use, which remarkably increases the utilisation rate of the equipment.

The implement carriage can include another piece of connecting means fitted at the rear end of the frame for connecting another implement to the implement carriage. For example, this enables utilisation of a combination of a gritter and a snowplough or alternatively, a combination of a lawn mower and a collector.

Advantageously, the propulsion machinery includes charging equipment for charging the battery unit with an AC network current which is less than 240 V. Thus, the equipment can be charged via a normal electrical socket-outlet.

The propulsion machinery can be encased for protecting it from moisture. Thus, the implement carriage can also be used during winter and rain.

The propulsion power needed by the implement carriage, such as brushing equipment or a snow blower, can be obtained from a separate electric motor, which uses the same battery unit as the electric motor that rotates the drive wheel.

Advantageously, the connecting means consist of an arm construction circulating the frame and including a connection point for the implement outside the front end of the frame along the longitudinal axis of the frame and a pivot point essentially at the centre of the frame. Such a construction enables exertion of forces of the implement at the centre of the frame and as low as possible.

The arm construction may include a lifting mechanism for lifting the implement off the ground. Thus, a plough or a push plate, for example, can be lifted up when moving in reverse.

According to an advantageous embodiment, the lifting mechanism is an extension to the arm construction essentially extending, relative to the pivot point, to the rear end of the frame for turning the arm construction about the pivot point in order to lift the implement off the ground by pressing with a foot. Such a construction is extremely simple and quick to use.

The RPM controller may be of the power semiconductor technology, which is arranged to enable a torque for the electric motor, when driving away from a standstill, that is at least 80 % of the maximum torque of said electric motor. A high torque when driving away from a standstill enables a smooth drive-away while the power semiconductor technology enables softly modulated power take-off.

Advantageously, the frame is mainly formed by bending. A frame formed by bending minimises the need of weld seams and is thereby economical to manufacture.

The implement can be a pushed implement, advantageously a snowplough. The weight distribution of the implement carriage together with the operator is particularly suitable for the use of a pushed implement.

According to an embodiment, the implement carriage includes a ballast bracket fitted at the rear end of the frame for installing ballast weights and/or a standby battery in the implement carriage in order to improve the traction of the drive wheel. A ballast bracket may be necessary when the implement carriage is used in very slippery conditions or if the operator is notably light in weight.

According to an embodiment, the ballast bracket can also be positioned at the front end of the frame. Thus, additional weight can also be placed in the position of the turning wheels, when necessary.

The ballast bracket may include a separate battery bracket for connecting additional batteries to the implement carriage. Alternatively, a battery bracket can also be connected to the front end of the implement carriage to equalise the weight distribution. With a separate battery bracket, a supplementary battery unit can be connected to the implement carriage, which increases the application time of the implement carriage and enables utilisation of batteries as a ballast weight.

An implement carriage according to the invention is economical to manufacture, easy to use and quiet during operation. In addition, the implement carriage is extremely versatile in use and can be used all year round regardless of the weather conditions. Furthermore, an implement carriage according to the invention has a light-weight construction and can be transported without a separate driving permit when the maximum speed is adjusted in compliance with laws. The weight of an implement carriage according to the invention is advantageously in a class of approximately 60 to 70 kg, of which the weight of the battery unit takes about 20 kg.

The invention is described below in detail by referring to the appended drawings, which illustrate some of the embodiments of the invention, in which:
- Figure 1: is an axonometric view of a first embodiment of an implement carriage according to the invention,
- Figure 2: is a lateral and partially cutaway view of the embodiment of figure 1,
- Figure 3: is a lateral and partially cutaway view of the design of the turning wheel and the connecting means according to the embodiment of figure 1,
- Figure 4: is a lateral view of the drive wheel and additional support wheels of an implement carriage according to a second embodiment,
- Figure 5a: is an axonometric view of a third embodiment of an implement carriage according to the invention,
- Figure 5b: illustrates the implement carriage of figure 5a without the protective cover,
- Figure 6a: is a lateral view of the embodiment of figure 5b without the protective cover,
- Figure 6b: illustrates the embodiment of figure 5b without the protective cover, seen from the other side,
- Figure 7a: is a bottom view of a third embodiment of the implement carriage according to the invention,
- Figure 7b: is a top view of a third embodiment of the implement carriage according to the invention,
- Figure 8: is a rear view of a third embodiment of the implement carriage according to the invention.

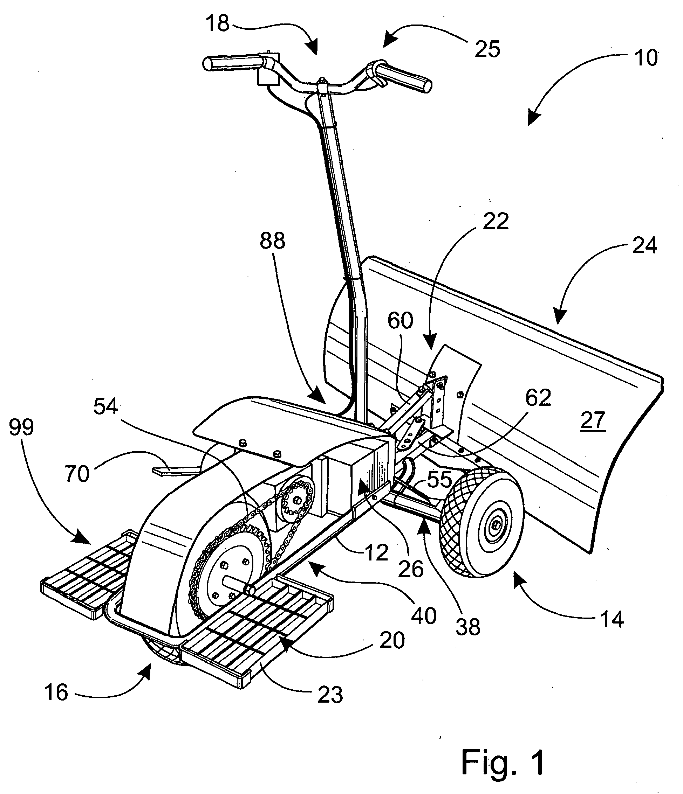

Figure 1 illustrates an implement carriage 10 according to a first embodiment of the invention. In all of the embodiments, the implement carriage 10 includes, according to figure 1, a frame 12 comprising a front end 88 and a rear end 99 and three wheels 14 and 16, of which two are turning wheels 14 fitted to the front end 88 of the frame 12 and one is a drive wheel 16 fixedly mounted with bearings at the rear end 99 of the frame 12. In addition, the implement carriage 10 includes steering means 18 fitted to the front end 88 of the frame 12 for turning the turning wheel 14 relative to the frame 12, and standing supports 23 as a support means 20 essentially fitted at the rear end 99 of the frame 12 for supporting the operator on the implement carriage and for enabling active shifting of the operator's weight in order to essentially place the weight of the operator on the drive wheel 16. Furthermore, the implement carriage 10 includes connecting means 22 fitted to the front end 88 of the frame 12 for connecting at least an optional pushed implement 24 to the frame 12, and an electric propulsion machinery 26 actuated by a battery unit 30 for rotating the drive wheel 16, said battery unit 30 being located essentially at the front end 88 of the frame 12 for ensuring a minimum weight for the turning wheels 14.

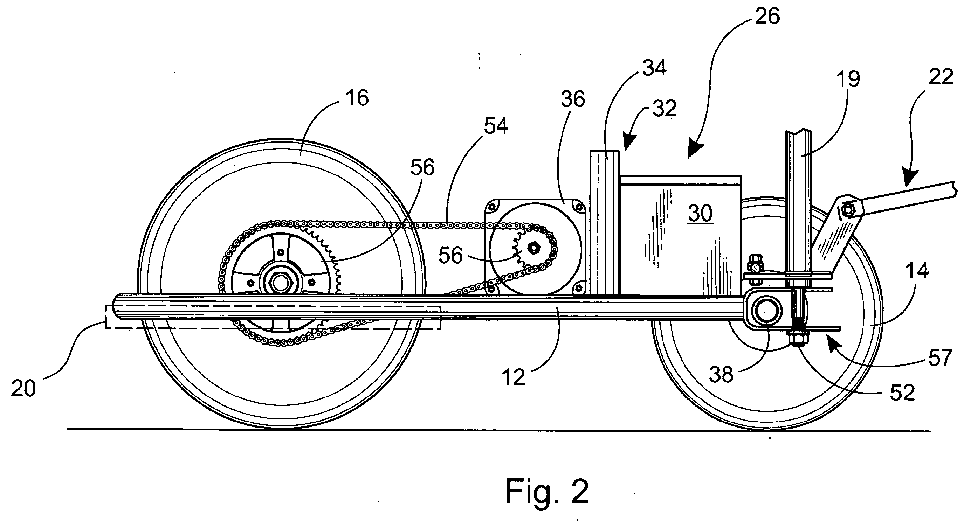

Turning wheels 14 are advantageously mounted with bearings on the front axle 38 by means of their hubs, the front axle being connected to the frame 12 by means of the vertical axle 52 shown in figure 2. In this case, the turning wheels 14 pivoted to the front axle 38 are turned using the tie rods 55 pivoted to the hubs of the turning wheels 14, which turn relative to the front axle. Hubs are not shown in the figures; however, hubs may be constructions completely equivalent to prior art hubs. In turn, the frame 12 may include a fork 57 to which the tie rod is pivoted. Steering means 18, which can consist of handlebars 25 like those used in a bike, are advantageously installed parallel to and concentrically with the axle 52. By turning the handlebars 25, the tie rods turn the hubs of the turning wheels 14 relative to the front axle 38. In the first embodiment of the invention as shown in figure 1, support means 20, which are standing supports 23, are installed on both sides of the drive wheel 16. Unlike in the figure, standing supports are generally positioned closer to the turning wheels so that they extend forwards from the position of the drive wheel axle and extend to the rear side of the drive wheel only slightly or only to the position of the drive wheel axle. Thus, operators can shift their weight on both sides of the drive wheel axle influencing the drivability of the implement carriage.

In the embodiment of figure 1, the propulsion machinery 26 is located along the distance between the drive wheel 16 and the steering means 18 at the rear end 99 of the frame 12. The propulsion machinery 26 is electric; i.e. it receives its propulsion power from electricity contained in the batteries. The electric propulsion machinery 26 includes at least a battery unit 30 and an electric motor 36 and, advantageously, a control unit 32, as well as an RPM controller, such as a frequency converter 34. For example, the electric motor may be a cage induction motor or a DC motor. Depending on the electric motor used, the operation can be implemented using a power semiconductor connection and a selected electric motor. The propulsion machinery may be an electric propulsion machine completely equivalent to those known from invalid carriages.

The battery unit 30 may include several individual batteries that are connected in series for achieving sufficient voltage. For example, batteries can be batteries or equivalent known from invalid carriages or electric cars, which are used at a voltage of 24 to 60 V, advantageously 48 V, for achieving sufficient output. A potentiometric control switch, which can be used to steplessly adjust the speed and direction of rotation of the electric motor of the propulsion machinery, is advantageously connected to the steering means. The control switch interacts with the control unit 32 of the propulsion machinery 26, which controls the frequency converter 34 for supplying an operating current with a suitable input frequency and voltage to the electric motor. With a frequency converter or an equivalent controller implemented with power semiconductors, it is possible to achieve a high starting torque for the electric motor. Unlike prior art solutions, a controller implemented with power semiconductors does not throttle the electric motor. In addition to the control switch, a separate switch may be provided which is used to drive the electric motor to reversing at half speed. The output of the electric motor used in an implement carriage according to the invention can range between 0.5 and 2.0 kW, advantageously between 0.8 and 1.5 kW, so that its output is also sufficient for heavy duties, such as snowclearing.

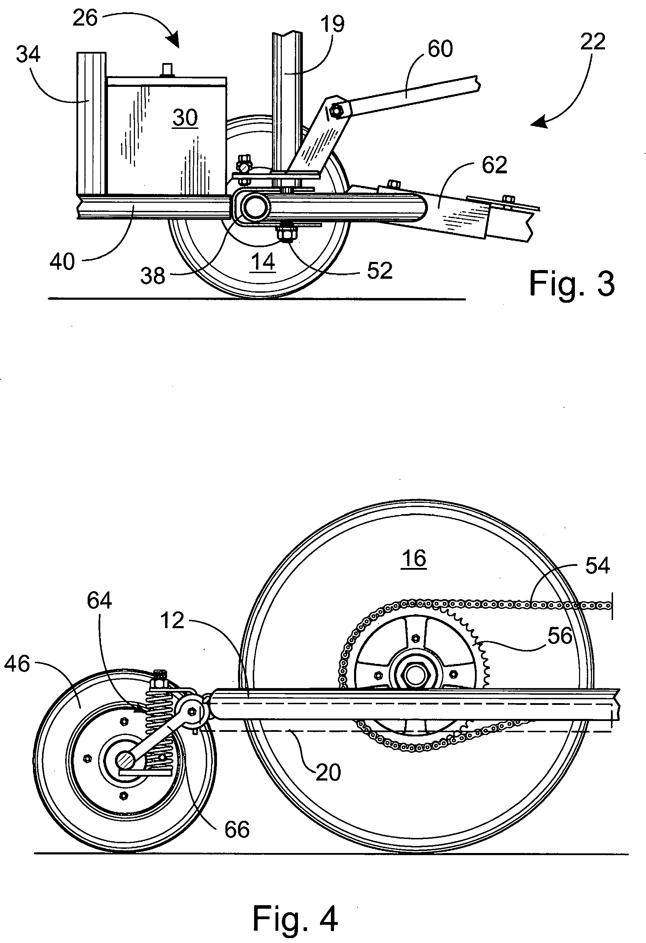

Figure 3 is a more detailed view of connecting means 22 of the first embodiment of the implement carriage according to the invention. The connecting means 22 can be of a quick-locking type; i.e. an optional implement can be connected with them quickly and efficiently. Referring to figures 1 and 3, connecting means 22 can be equipment similar to the so-called three-point linkage, having a top link 60 and two lower links 62. The lower link 62 can also be an individual one, divided into two branched sections. The top and lower links 60 and 62 can be telescopic, in which case their lengths can be adjusted as necessary. With such a construction, it is possible to adjust the inclination and toe angle of the implement 24, i.e. a plough 24 shown in figure 1, as necessary. Advantageously, the top link 60 and the lower links 62 are pivoted to the frame 12 with a horizontal articulation, which enables lifting of the implement off the ground. This articulation can be a sleeve, connected around the front axle, enabling rotation. The connecting means 22 can have a lifting mechanism 92, partly shown in figure 1, connected thereto, which can be used to turn the top link and the lower links to lift the implement by pressing it. The lifting mechanism 92 is advantageously an extension 70, which is operated manually by a foot. Alternatively, instead of a lifting arm, the lifting mechanism can also be implemented electrically.

In a second embodiment of the implement carriage according to the invention shown in figure 4, an additional support wheel 46 is connected to the rear end of the frame. Advantageously, two additional support wheels are provided correspondingly with the turning wheels. The purpose of additional support wheels is to stabilise the construction of the implement carriage in such a way that the implement carriage cannot fall even if operators stand on the other side of the support means loading it with their full bodyweight. According to figure 4, the additional support wheel or wheels 46 can be connected to the frame 12 using a separate support arm 66 pivoted to the frame 12. The support arm 66 can be provided with suspension by means of a spring 64. Suspension can also be included in the turning wheel and the drive wheel. In this case, the implement carriage can be made notably more comfortable to ride. However, the use of additional support wheels is not necessary if turning wheels and drive wheels are located at sufficient distances from each other so that the turning wheel or wheels and the drive wheel or wheels form a triangle with a sufficiently wide base when viewed from above.

An implement carriage according to the invention can also be realised with frame steering, in which case the front frame and the rear frame are almost of an equal size and an articulation is provided between them enabling turning of the front and rear frames relative to each other. A frame-steered implement carriage turns in an extremely agile way in a small space.

According to figures 1, 2 and 4, power transmission from the electric motor to the drive wheel may take place with a chain 54. With a chain 54, power can be transmitted between the electric motor and the pinions 56 of the drive wheel. The electric motor may include a planetary gear as an integral part, with which the power transmission ratio can be adjusted suitable for the application regarding the torque and speed of rotation. Unlike in the figures, the transmission can also be implemented as a friction drive, wherein a drive gear, connected to the power take-off shaft of the electric motor, directly rotates the drive wheel via friction by contacting its surface. Furthermore, according to another alternative, the electric motor can be a wheel-hub motor, in which case the power take-off shaft of the electric motor functions as the drive wheel axle, directly or indirectly.

Charging of the electric propulsion machinery can be advantageously performed using the charging equipment included in the propulsion machinery. The charging equipment may include a charger, with which it is possible to use a 230 V supply from socket-outlets or other equivalent alternating current to charge the battery unit. Advantageously, the electric propulsion machinery is tightly encased so that the implement carriage according to the invention can also be used in winter and humid weather conditions without risk of short-circuit caused by the high air humidity. Alternatively, the propulsion machinery can be manufactured as completely weather-proof.

For example, the frame of an implement carriage according to the invention, as well as the support means and steering means, can be manufactured from a steel or aluminium profile. The drive wheel and the turning wheels can be air-filled rubber wheels. Advantageously, at least one drive wheel is patterned to improve traction. Advantageously, standing supports are made of an open grating structure, which allows snow to go through keeping thus clean during winter.

An implement carriage according to the invention may also include second connecting means fitted, for example, at the end of the frame, to which another implement can be connected. Thus, a plough, for instance, may be connected to the connecting means and a gritter to the second connecting means, which enables ploughing and gritting at the same time in winter. The second connecting means may also include a separate electric power take-off, which can be used, if necessary, for driving an electric implement.

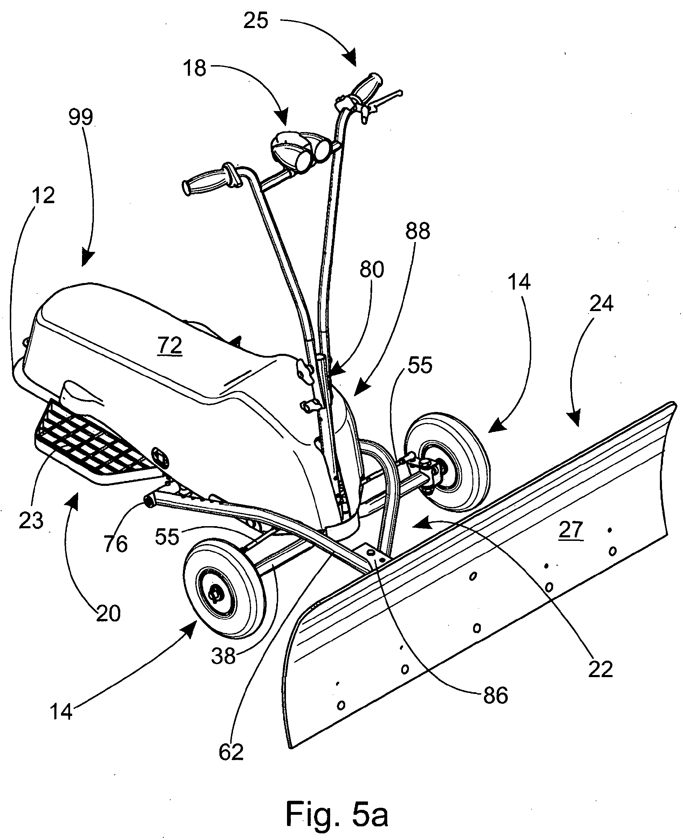

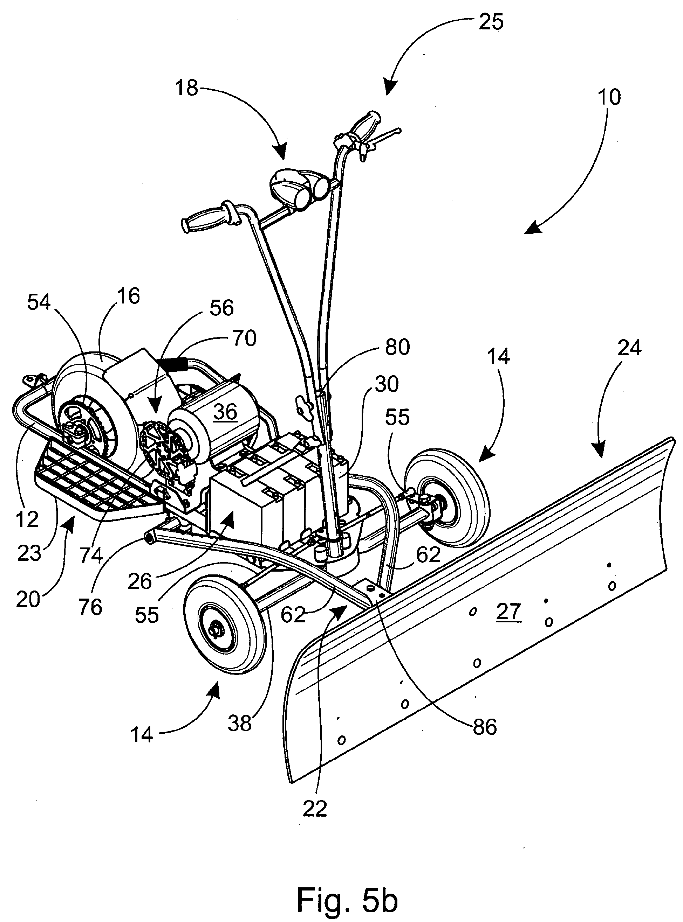

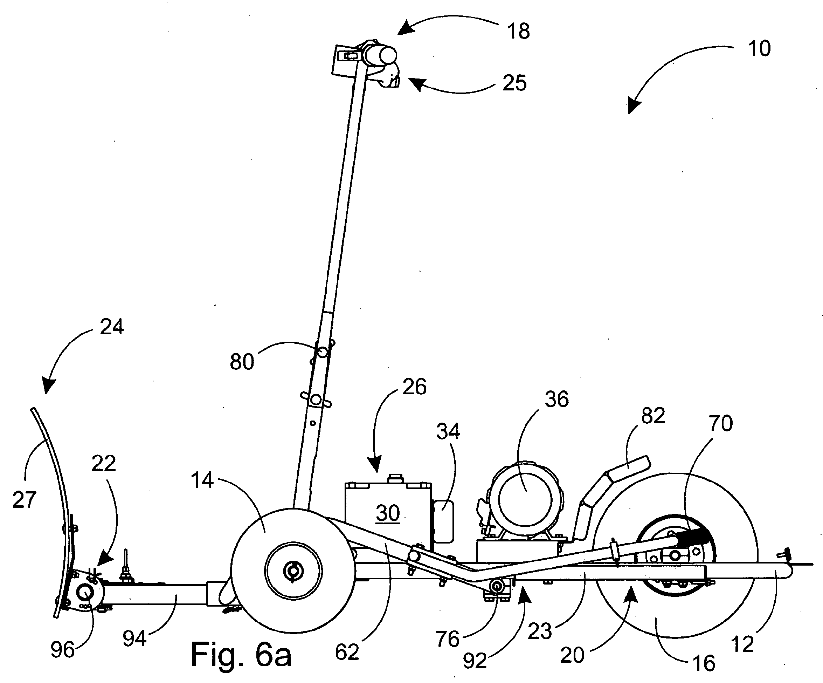

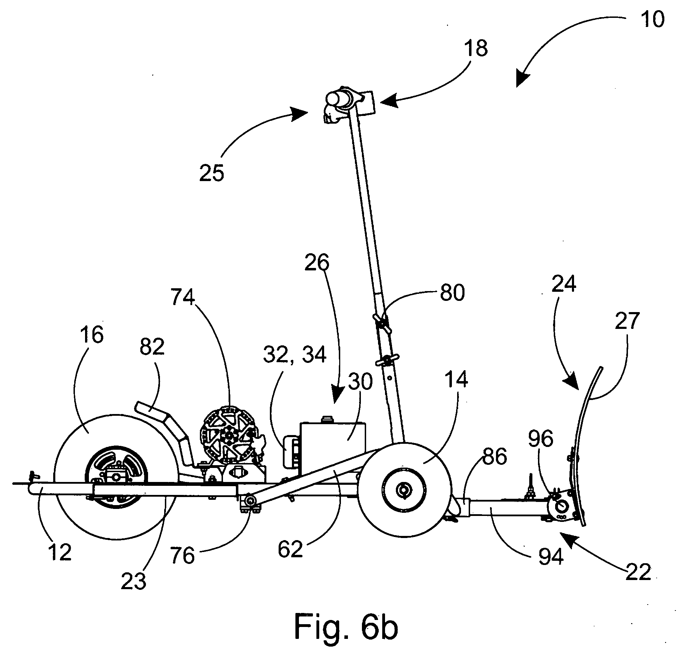

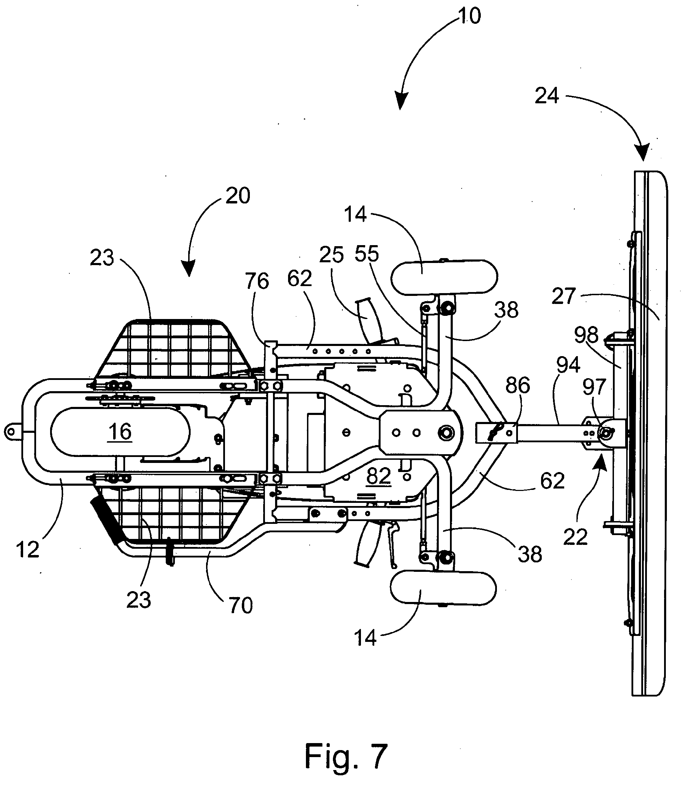

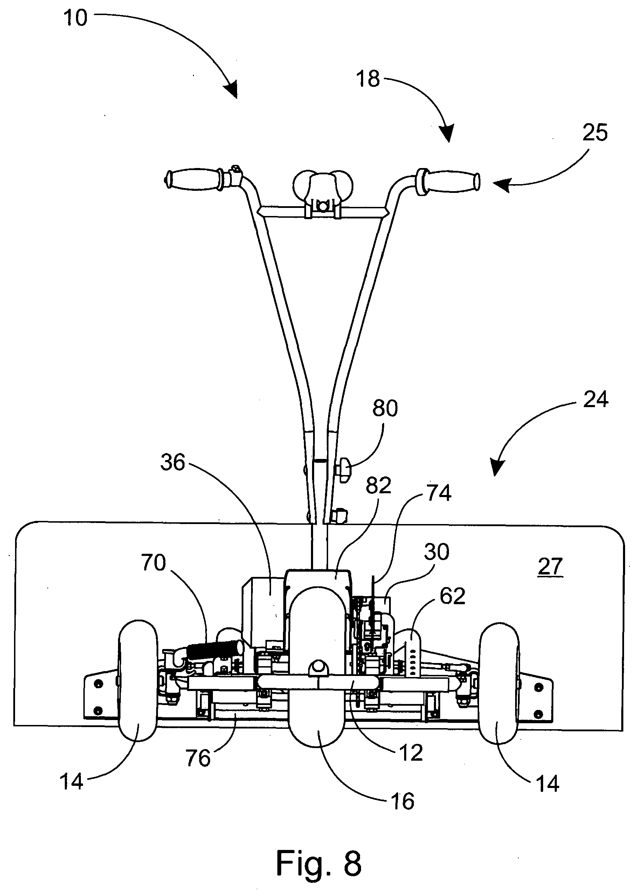

Figures 5a to 8 illustrate a third embodiment of the implement carriage according to the invention, which differs from the embodiment of figures 1 to 3 mainly regarding the connecting means 22. According to figure 5a, the propulsion machinery 26 of the implement carriage 10 is covered with a protective cover 72. For example, when using a chain drive, the protective cover 72 protects the operator from rotating parts and, on the other hand, it also protects the propulsion machinery from humidity and dents. The protective cover advantageously includes an opening for cooling the electric motor. According to figure 5b, a separate internal mudguard 82 may also be provided inside the protective cover 72 to protect the electric motor from splashing caused by the drive wheel. For the sake of clarity, the chain for transmitting power between the drive wheel 16 and the gears of the electric motor 36 is not shown in figures 5a to 8; however, it should be understood that such a chain is included in the embodiment proposed.

According to figures 5a to 8, connecting means 22 may consist of a link construction 65 circulating the frame 12, which consists of two profiled lower links 62. The lower links 62 are connected to each other in front of the frame 12 and, on the other hand, to a pivot point 76. Advantageously, the pivot point 76 is located below the frame 12 approximately in the middle of the frame 12 in its longitudinal direction. Thus, the fulcrum of forces exerted on the implement carriage 10 by the implement 24 is notably low and located at the centre of the implement carriage 10, the implement carriage 10 being thus stable.

A sleeve 86 is formed between the lower links 62 in front of the frame 12 for the implement 24, to which sleeve the implement 24 can be connected with an arm 94 equipped with a single-point linkage. In other words, the sleeve 86 is outside the front end 88 of the frame 12 along the longitudinal axis of the frame 12. Advantageously, the implement is connected to the sleeve 86 by means of the arm 94 pivoted to it. The sleeve and the arm may be provided with connecting means, with which the arm is locked in a suitable position within the sleeve to position the implement at a correct distance from the implement carriage. Connecting means may consist of a perforation in the arm and a pin. Connecting means 22 may also include a transverse arm 98 pivoted to the end of the arm 94 with a transverse articulation 96 and a vertical articulation 97, to which a plough, for example, is connected. The articulations enable adjustment of the plough angle relative to the implement carriage.

The link construction 65 includes a lifting mechanism 92 for lifting the implement 24 off the ground. Advantageously, the lifting mechanism 92 is an extension 70 to the link construction 65 essentially extending to the rear end 99 of the frame 12 relative to the pivot point 76 for turning the link construction 65 about the pivot point 76 in order to lift the implement 24 off the ground by pressing with a foot. The operator standing on the standing supports can easily generate sufficient force for lifting the implement 24 by pressing with a foot. In addition, a foot-operated lifting mechanism is extremely quick to use and economical to manufacture. Alternatively, the lifting mechanism may include an electric motor for lifting the implement; however, such a construction is more expensive to realise.

According to figures 5a to 8, steering means 18 can consist of handlebars 25 connected to the vertical pipe 19. For transportation purposes, the vertical pipe 19 can be composed of two sections with a pivot mechanism 80 between them for folding the steering means 18 to occupy a smaller space, essentially in the longitudinal direction of the frame 12, for transportation. The same pivot mechanism can also be used to turn the handlebars towards the operator to obtain a better position.

According to figure 5b, brakes 74, with which the speed of the implement carriage according to the invention can be efficiently decreased as required, may be connected to the power take-off shaft of the electric motor. For example, the brakes may be disc brakes according to figure 5b, which can be similar to those used in a motorcycle or a bike.

Advantageously, the implement used in the implement carriage according to the invention is a pushed implement, such as a plough or a push plate.

## Claims

1. A ride-on implement carriage, which includes
- a frame (12) comprising a front end (88) and a rear end (99),
- three wheels (14, 16) of which at least one is a turning wheel (14) and one is a drive wheel (16) mounted with bearings on the frame (12),
- steering means (18) fitted at the front end (88) of the frame (12) for turning said turning wheel (14) relative to the frame (12),
- support means (20) for supporting an operator on the implement carriage (10), said support means (20) being standing supports (23) essentially fitted to the rear end (99) of the frame (12) for enabling active shifting of the operator's weight in order to essentially place the operator's weight on the drive wheel (16),
- connecting means (22) fitted to the frame (12) for connecting an optional implement (24) to the frame (12), said connecting means (22) being fitted to the front end (88) of the frame (12) for connecting at least an optional pushed implement (25) to the frame (12), and
- an electrical propulsion machinery (26) actuated by a battery unit (30) for rotating the drive wheel (16),
**characterized in that**
- two of said three wheels are turning wheels (14) fitted to the front end (88) of said frame (12) and one is said drive wheel (16) equipped with bearings fixedly mounted at the rear end (99) of the frame (12), the ride-on implement carriage (10) having only one drive wheel (16),
- said battery unit (30) is essentially located at the front end (88) of the frame (12) for ensuring a minimum weight for the turning wheels (14),
wherein the ride-on implement carriage (10) further includes a front axle (38) having hubs, the front axle (38) being connected to the frame (12) by means of a vertical axle (52), and tie rods (55) pivoted to the hubs of the turning wheels (14), said turning wheels (14) being pivoted with bearings on said front axle (38) by means of their hubs and the turning wheels (14) being arranged to be turned using the tie rods (55) pivoted to the hubs of the turning wheels (14), which hubs are arranged to turn relative to the front axle (38).

2. An implement carriage according to claim 1, **characterised in that** the length of said standing supports (23) is between 25 % and 50 %, advantageously between 30 % and 40 % of the length of the frame (12).

3. An implement carriage according to claim 1 or 2, **characterised in that** the propulsion machinery (26) includes at least a battery unit (30) for storing energy, an electric motor (36) for converting energy stored in the battery unit (30) into rotary motion, a control unit (32) for controlling the electric motor (36) and an RPM controller implemented with power semiconductors for controlling the speed of rotation of the electric motor (36).

4. An implement carriage according to claim 3, **characterised in that** said control unit (32) is arranged to allow driving of the electric motor forwards (36) at the full output/speed and backwards at a partial output/speed.

5. An implement carriage according to any of claims 1 to 4, **characterised in that** the propulsion machinery (26) is arranged to operate at a voltage of 24 to 60 V, advantageously at about 48 V.

6. An implement carriage according to any of claims 1 to 5, **characterised in that** said implement (24) is one or more of the following: snow rake, snowplough, snow blower, brushing equipment, waste collection equipment, lawn mower, wheelbarrow, shopping bag carrier.

7. An implement carriage according to any of claims 1 to 6, **characterised in that** the propulsion machinery (26) includes charging equipment for charging the battery unit (30) with an AC network current which is less than 240 V.

8. An implement carriage according to any of claims 1 to 7, **characterised in that** the implement carriage (10) includes second connecting means fitted at the rear end (99) of the frame (12).

9. An implement carriage according to any of claims 1 to 8, **characterised in that** said connecting means (22) consist of a link construction (65) circulating the frame (12), including a connection point for the implement (24) outside the front end (88) of the frame (12) along the longitudinal axis of the frame (12) and a pivot point (76) essentially at the centre of the frame (12).

10. An implement carriage according to claim 9, **characterised in that** said link construction (65) includes a lifting mechanism (92) for lifting the implement (24) off the ground.

11. An implement carriage according to claim 10, **characterised in that** the lifting mechanism (92) is an extension (70) to the link construction (65) essentially extending to the rear end (99) of the frame (12) relative to the pivot point (76) for turning the link construction (65) about the pivot point (76) in order to lift the implement (24) off the ground by pressing with a foot.

12. An implement carriage according to any of claims 1 to 11, **characterised in that** said RMP controller is of the power semiconductor technology, which is arranged to enable a torque for said electric motor (36), when driving away from a standstill, that is at least 80 % of the maximum torque of said electric motor (36).

13. An implement carriage according to any of claims 1 to 12, **characterised in that** said frame (12) is mainly formed by bending.

14. An implement carriage according to any of claims 1 to 13, **characterised in that** said implement (24) is a pushed implement, advantageously a snowplough.

15. An implement carriage according to any of claims 1 to 14, **characterised in that** the implement carriage (10) includes a ballast bracket fitted to the rear end (99) of the frame (12) for installing ballast weights and/or a standby battery in the implement carriage (10) for improving the traction of the drive wheel (16).

## Patentansprüche

1. Aufstehwerkzeugwagen, welcher folgendes umfasst:
- einen Rahmen (12) umfassend eine Frontpartie (88) und eine Heckpartie (99),
- drei Räder (14, 16), von denen mindestens eines ein drehendes Rad (14) und eines ein Antriebsrad (16) ist, über Lager am Rahmen (12) montiert,
- an der Frontpartie (88) des Rahmens (12) befestigte Lenkmittel (18), um das genannte drehende Rad (14) relativ zum Rahmen (12) zu drehen,
- Tragemittel (20) zum Tragen eines Bedieners auf dem Werkzeugwagen (10), wobei die genannten Tragemittel (20) Aufstehstützen (23) sind, die im Wesentlichen an der Heckpartie (99) des Rahmens (12) befestigt sind, um die aktive Gewichtsverlagerung des Bedieners zu ermöglichen, so dass das Gewicht des Bedieners im Wesentlichen auf dem Antriebsrad (16) platziert ist,
- am Rahmen (12) befestigte Verbindungsmittel (22) zur Verbindung eines optionalen Geräts (24) mit dem Rahmen (12), wobei die genannten Verbindungsmittel (22) an der Frontpartie (88) des Rahmens (12) befestigt sind, um mindestens ein optionales geschobenes Gerät (25) mit dem Rahmen (12) zu verbinden, und
- eine durch eine Batterieeinheit (30) betätigte elektrische Antriebsmaschine (26) zum Drehen des Antriebsrades (16),
**dadurch gekennzeichnet, dass**
- zwei der genannten drei Räder an der Frontpartie (88) des genannten Rahmens (12) befestigte drehende Räder (14) sind und eines das genannte Antriebsrad (16) ist, ausgestattet mit Lagern und fest an der Heckpartie (99) des Rahmens (12) montiert, wobei der Aufstehwerkzeugwagen (10) über nur ein Antriebsrad (16) verfügt,
- die genannte Batterieeinheit (30) im Wesentlichen auf der Frontpartie (88) des Rahmens (12) angeordnet ist, um ein minimales Gewicht für die drehenden Räder (14) sicherzustellen,
wobei der Aufstehwerkzeugwagen (10) weiterhin eine Frontachse (38) mit Naben einschließt, wobei die Frontachse (38) mit dem Rahmen (12) über eine Vertikalachse (52) sowie über Zugstangen (55) verbunden ist, die an den Naben der drehenden Räder (14) drehbar gelagert sind, wobei die genannten drehenden Räder (14) mit Lagern auf der genannten Frontachse (38) über ihre Naben drehbar gelagert sind und die drehenden Räder (14) so angeordnet sind, dass sie mithilfe der an den Naben der drehenden Räder (14) drehbar gelagerten Zugstangen (55) gedreht werden können, wobei die Naben dazu ausgelegt sind, relativ zur Frontachse (38) gedreht zu werden.

2. Aufstehwerkzeugwagen nach Anspruch 1, **dadurch gekennzeichnet, dass** die Länge der genannten Aufstehstützen (23) zwischen 25 % und 50 %, bevorzugt zwischen 30 % und 40 % der Länge des Rahmens (12) ausmacht.

3. Aufstehwerkzeugwagen nach Anspruch 1 oder 2, **dadurch gekennzeichnet, dass** die Antriebsmaschine (26) mindestens eine Batterieeinheit (30) zum Speichern von Energie, einen Elektromotor (36) zum Umwandeln der in der Batterieeinheit (30) gespeicherten Energie in Rotationsbewegung, eine Steuereinheit (32) zur Steuerung des Elektromotors (36) sowie einen mit Leistungshalbleitern realisierten Drehzahlregler zur Regelung der Rotationsgeschwindigkeit des Elektromotors (36) umfasst.

4. Aufstehwerkzeugwagen nach Anspruch 3, **dadurch gekennzeichnet, dass** die genannte Steuereinheit (32) so ausgelegt ist, dass sie das Vorwärtsfahren des Elektromotors (36) bei voller Leistung/Geschwindigkeit und das Rückwärtsfahren bei teilweiser Leistung/Geschwindigkeit ermöglicht.

5. Aufstehwerkzeugwagen nach einem der Ansprüche 1 bis 4, **dadurch gekennzeichnet, dass** die Antriebsmaschine (26) dazu ausgelegt ist, mit einer Spannung von 24 bis 60 V, bevorzugt von etwa 48 V, betrieben zu werden.

6. Aufstehwerkzeugwagen nach einem der Ansprüche 1 bis 5, **dadurch gekennzeichnet, dass** das genannte Werkzeug (24) eines oder mehrere Werkzeuge aus der folgenden Liste umfasst: Schneerechen, Schneepflug, Schneefräse, Bürstenmaschine, Abfallsammlungsmaschine, Rasenmäher, Schubkarre, Einkaufstaschenträger.

7. Aufstehwerkzeugwagen nach einem der Ansprüche 1 bis 6, **dadurch gekennzeichnet, dass** die Antriebsmaschine (26) ein Ladegerät zum Aufladen der Batterieeinheit (30) mit einem Netz-Wechselstrom von weniger als 240 V einschließt.

8. Aufstehwerkzeugwagen nach einem der Ansprüche 1 bis 7, **dadurch gekennzeichnet, dass** der Werkzeugwagen (10) zweite Verbindungsmittel umfasst, welche an der Heckpartie (99) des Rahmens (12) befestigt sind.

9. Aufstehwerkzeugwagen nach einem der Ansprüche 1 bis 8, **dadurch gekennzeichnet, dass** die genannten Verbindungsmittel (22) aus einer Verbindungskonstruktion (65) bestehen, welche um den Rahmen (12) herum verläuft, einschließlich eines Verbindungspunktes für das Werkzeug (24) außerhalb der Frontpartie (88) des Rahmens (12) entlang der Längsachse des Rahmens (12) und eines im Wesentlichen in der Mitte des Rahmens (12) befindlichen Drehpunkts (76).

10. Aufstehwerkzeugwagen nach Anspruch 9, **dadurch gekennzeichnet, dass** die genannte Verbindungskonstruktion (65) einen Hebemechanismus (92) zum Anheben des Werkzeugs (24) vom Boden einschließt.

11. Aufstehwerkzeugwagen nach Anspruch 10, **dadurch gekennzeichnet, dass** der Hebemechanismus (92) eine Verlängerung (70) der Verbindungskonstruktion (65) darstellt, die sich im Wesentlichen bis zur Heckpartie (99) des Rahmens (12) und relativ zum Drehpunkt (76) erstreckt und dazu dient, die Verbindungskonstruktion (65) um den Drehpunkt (76) zu drehen und damit das Werkzeug (24) vom Boden anzuheben, indem mit einem Fuß Druck darauf ausgeübt wird.

12. Aufstehwerkzeugwagen nach einem der Ansprüche 1 bis 11, **dadurch gekennzeichnet, dass** der genannte Drehzahlregler mit Leistungshalbleitertechnologie betrieben wird, die dafür ausgelegt ist, beim Anfahren aus dem Stillstand, ein Drehmoment des genannten Elektromotors (36) zu ermöglichen, welches mindestens 80 % des maximalen Drehmoments des genannten Elektromotors (36) entspricht.

13. Aufstehwerkzeugwagen nach einem der Ansprüche 1 bis 12, **dadurch gekennzeichnet, dass** der genannte Rahmen (12) hauptsächlich durch Biegen geformt ist.

14. Aufstehwerkzeugwagen nach einem der Ansprüche 1 bis 13, **dadurch gekennzeichnet, dass** das genannte Werkzeug (24) ein geschobenes Werkzeug, vorzugsweise ein Schneepflug, ist.

15. Aufstehwerkzeugwagen nach einem der Ansprüche 1 bis 14, **dadurch gekennzeichnet, dass** der Werkzeugwagen (10) eine an der Heckpartie (99) des Rahmens (12) befestigte Ballasthalterung einschließt, um Ballastgewichte und/oder eine Ersatzbatterie im Werkzeugwagen (10) zu installieren und damit die Traktion des Antriebsrades (16) zu verbessern.

## Revendications

1. Chariot porteur à outil, qui comprend
- un châssis (12) comprenant une extrémité avant (88) et une extrémité arrière (99),
- trois roues (14, 16) dont au moins une est une roue d'orientation (14) et une une roue motrice (16) montée via des roulements sur le châssis (12),
- des moyens de direction (18) placés au niveau de l'extrémité avant (88) du châssis (12) et permettant de tourner ladite roue d'orientation (14) par rapport au châssis (12),
- des moyens de support (20) destinés à supporter un opérateur sur le chariot à outil (10), lesdits moyens de support (20) étant des supports pour position debout (23) essentiellement placés à l'extrémité arrière (99) du châssis (12) afin de permettre un déplacement actif du poids de l'opérateur en vue de placer essentiellement le poids de l'opérateur sur la roue motrice (16),
- des moyens de connexion (22) placés sur le châssis (12) et destinés à connecter un outil optionnel (24) au châssis (12), ledit moyen de connexion (22) étant placé à l'extrémité avant (88) du châssis (12) pour connecter au moins un outil poussé optionnel (25) au châssis (12), et
- une machinerie de propulsion électrique (26) actionnée par une unité à batterie (30) et destinée à faire tourner la roue motrice (16),
**caractérisé en ce que**
- deux desdites trois roues sont des roues d'orientation (14) placées à l'extrémité avant (88) dudit châssis (12) et une est ladite roue motrice (16) équipée de roulements et montée de façon fixe à l'extrémité arrière (99) du châssis (12), le chariot porteur à outil (10) ne possédant qu'une roue motrice (16),
- ladite unité à batterie (30) est essentiellement située à l'extrémité avant (88) du châssis (12) pour garantir un poids minimal pour les roues d'orientation (14),
où le chariot porteur à outil (10) comporte en outre un essieu avant (38) équipé de moyeux, l'essieu avant (38) étant relié au châssis (12) au moyen d'un pivot vertical (52), et des biellettes de direction (55) en pivotement par rapport aux moyeux des roues d'orientation (14), lesdites roues d'orientation (14) pouvant pivoter via des roulements sur ledit essieu avant (38) au moyen de leurs moyeux, et les roues d'orientation (14) étant agencées pour pouvoir pivoter en utilisant les biellettes de direction (55) pivotées par rapport aux moyeux des roues d'orientation (14), lesdits moyeux étant agencés pour tourner par rapport à l'essieu avant (38).

2. Chariot à outil selon la revendication 1, **caractérisé en ce que** la longueur desdits supports pour position debout (23) est comprise entre 25 % et 50 %, et de façon avantageuse entre 30 % et 40 %, de la longueur du châssis (12).

3. Chariot à outil selon la revendication 1 ou 2, **caractérisé en ce que** la machinerie de propulsion (26) comporte au moins une unité à batterie (30) destinée à stocker de l'énergie, un moteur électrique (36) permettant de convertir l'énergie stockée dans l'unité à batterie (30) en mouvement de rotation, une unité de commande (32) destinée à contrôler le moteur électrique (36) et un contrôleur de régime mis en oeuvre avec des semiconducteurs de puissance pour contrôler la vitesse de rotation du moteur électrique (36).

4. Chariot à outil selon la revendication 3, **caractérisé en ce que** ladite unité de commande (32) est agencée pour permettre la propulsion en avant du moteur électrique (36) à pleine puissance/vitesse et en arrière à une puissance/vitesse partielle.

5. Chariot à outil selon l'une quelconque des revendications 1 à 4, **caractérisé en ce que** la machinerie de propulsion (26) est agencée pour fonctionner selon une tension comprise entre 24 et 60 V, de façon avantageuse environ égale à 48 V.

6. Chariot à outil selon l'une quelconque des revendications 1 à 5, **caractérisé en ce que** ledit outil (24) est un ou plusieurs des outils suivants: râtelier à neige, chasse-neige, souffleuse à neige, équipement de balayage, équipement de ramassage des ordures ménagères, tondeuse à gazon, brouette, chariot porte-courses.

7. Chariot à outil selon l'une quelconque des revendications 1 à 6, **caractérisé en ce que** la machinerie de propulsion (26) comporte un équipement chargeur destiné à charger l'unité à batterie (30) en utilisant un courant de réseau CA de tension inférieure à 240 V.

8. Chariot à outil selon l'une quelconque des revendications 1 à 7, **caractérisé en ce que** le chariot à outil (10) comporte des seconds moyens de connexion placés à l'extrémité arrière (99) du châssis (12).

9. Chariot à outil selon l'une quelconque des revendications 1 à 8, **caractérisé en ce que** lesdits moyens de connexion (22) se composent d'une construction articulée (65) le long du châssis (12), comprenant un point de connexion pour l'outil (24) en dehors de l'extrémité avant (88) du châssis (12) le long de l'axe longitudinal du châssis (12), et un point pivot (76) situé essentiellement au centre du châssis (12).

10. Chariot à outil selon la revendication 9, **caractérisé en ce que** ladite construction articulée (65) comporte un mécanisme élévateur (92) destiné à lever l'outil (24) depuis le sol.

11. Chariot à outil selon la revendication 10, **caractérisé en ce que** le mécanisme élévateur (92) est une extension (70) de la construction articulée (65) s'étendant essentiellement vers l'extrémité arrière (99) du châssis (12) par rapport au point pivot (76) afin de faire pivoter la construction articulée (65) autour du point pivot (76) pour relever l'outil (24) du sol par appui avec le pied.

12. Chariot à outil selon l'une quelconque des revendications 1 à 11, **caractérisé en ce que** ledit contrôleur de régime utilise la technologie du semiconducteur de puissance, agencée pour permettre un couple audit moteur électrique (36), lorsque l'on quitte l'arrêt, qui soit au moins de 80 % du couple maximal dudit moteur électrique (36).

13. Chariot à outil selon l'une quelconque des revendications 1 à 12, **caractérisé en ce que** ledit châssis (12) est essentiellement formé par cintrage.

14. Chariot à outil selon l'une quelconque des revendications 1 à 13, **caractérisé en ce que** ledit outil (24) est un outil poussé, de façon avantageuse un chasse-neige.

15. Chariot à outil selon l'une quelconque des revendications 1 à 14, **caractérisé en ce que** le chariot à outil (10) comporte un support de ballast placé sur l'extrémité arrière (99) du châssis (12) pour installer les poids d'alourdissement et/ou une batterie de réserve dans le chariot à outil (10) en vue d'améliorer la traction de la roue motrice (16).
